# FASCICULE DE BREVET EUROPEEN

(11) **EP 2 496 447 B1**
(45) Date de publication et mention de la délivrance du brevet: **26.02.2014**
(21) Numéro de dépôt: 10766294.2
(22) Date de dépôt: 20.10.2010
(51) Int. Cl.: B60R 25/02

(54) **DISPOSITIF ANTIVOL POUR COLONNE DE DIRECTION DE VÉHICULE MUNI D'UN ACTIONNEUR DE PÊNE À COURSE MORTE**
DIEBSTAHLSCHUTZVORRICHTUNG FÜR EINE LENKSÄULE EINES FAHRZEUGES MIT EINEM ANTRIEB FÜR EINEN TOTGEHENDEN RIEGEL
VEHICLE ANTITHEFT DEVICE FOR A STEERING COLUMN HAVING AN LOST MOTION ACTUATOR FOR A BOLT

(30) Priorité: 05.11.2009 FR 0905313
(43) Date de publication de la demande: 12.09.2012
(73) Titulaire: Valeo Securité Habitacle, 94046 Créteil Cedex (FR)
(72) Inventeur: LESUEUR, Guillaume, F-94046 Creteil Cedex (FR)
(74) Mandataire: Croonenbroek, Thomas Jakob
(86) Numéro de dépôt international: PCT/EP2010/065818
(87) Numéro de publication internationale: WO 2011/054672

(56) Documents cités:
- EP-A1- 1 084 915
- WO-A1-2008/074726
- FR-A1- 2 776 976
- FR-A1- 2 885 632
- US-A- 5 230 233

## Description

L'invention concerne les dispositifs antivol pour les colonnes de direction de véhicule.

Ces dispositifs comprennent généralement le verrou pour la clé de contact du véhicule, et un pêne apte à bloquer le mouvement de la colonne lorsqu'il n'est pas autorisé, notamment lorsque la clé de contact est absente. En outre, ils sont fréquemment dotés d'une fonction dite de super condamnation qui vise à maintenir le blocage de la colonne même si un malfaiteur a rompu la partie du dispositif portant le verrou. Le pêne se trouve alors immobilisé dans une position dans laquelle il bloque la manoeuvre de la colonne de direction, voir par exemple FR-A-2 885 632.

Toutefois, lors de la rupture de la partie avant du dispositif portant le verrou, son déplacement peut entraîner celui d'une tirette qui sert à mànoeuvrer le pêne et, par voie de conséquence, entraîner aussi le déplacement de ce dernier. Dans ces conditions, lorsque la fonction de super condamnation se déclenche, elle immobilise le pêne dans une position où il ne bloque pas la manoeuvre de la colonne.

Un but de l'invention est de faire en sorte que la super condamnation soit aussi effective dans un tel cas.

A cet effet, on prévoit selon l'invention un dispositif antivol pour colonne de direction de véhicule, qui comprend :
- un pêne apte à occuper une position de blocage d'une colonne de direction ; et
- un actionneur de manoeuvre du pêne,
le dispositif étant agencé de sorte qu'un déplacement de l'actionneur pour que le pêne quitte la position de blocage, à partir d'une position dans laquelle il a placé le pêne en position de blocage, débute par une course morte n'entraînant pas de déplacement du pêne.

Ainsi, lorsque l'actionneur commence à se déplacer, le pêne demeure immobile. Dans ces conditions, on permet à la super condamnation de se produire avant que le pêne ait lui-même commencé à bouger. La colonne de direction reste donc effectivement bloquée par le pêne.

Le dispositif est agencé de sorte qu'un déplacement quelconque de l'actionneur en vue de placer le pêne en position de blocage s'effectue sans course morte.

Ainsi, la position de blocage est toujours convenablement atteinte.

De préférence, le dispositif est agencé de sorte que, pour une même vitesse de déplacement de l'actionneur, un déplacement du pêne au moyen de l'actionneur s'effectue à plus grande vitesse en direction opposée à la position de blocage qu'en direction de cette position.

Ainsi, sachant que les points de départ et d'arrivée des courses du pêne coïncident dans les deux sens et que son déplacement en direction opposée à la position de blocage démarre après la course morte de l'actionneur, on permet au pêne de rattraper son retard sur l'actionneur au moyen d'une vitesse de déplacement plus rapide.

Avantageusement, le dispositif est agencé de sorte que l'actionneur coopère directement avec le pêne pour le déplacer.

Ainsi, la liaison entre les deux organes demeure simple à réaliser et économe en nombre de pièces et en opérations de montage.

Le dispositif selon l'invention pourra présenter en outre au moins l'une quelconque des caractéristiques suivantes :
- le dispositif est agencé de sorte que l'actionneur coopère avec le pêne par effet de rampe ;
- le pêne présente au moins une rampe ;
- le dispositif présente au moins une rampe pour la manoeuvre du pêne en direction de la position de blocage et/ou en direction opposée à la position de blocage ;
- le dispositif présente deux rampes inclinées l'une par rapport à l'autre, pour la manoeuvre du pêne ;
- le dispositif présente un suiveur et deux rampes associés au déplacement du pêne respectivement en direction de la position de blocage et en direction opposée, le dispositif étant agencé pour que le suiveur vienne en contact avec les deux rampes ; et
- l'actionneur s'étend dans une cavité du pêne.

On prévoit également selon l'invention un véhicule qui comprend un dispositif selon l'invention.

D'autres caractéristiques et avantages de l'invention apparaîtront encore dans la description suivante d'un mode de réalisation donné à titre d'exemple non limitatif en référence aux dessins annexés sur lesquels :
- les figures 1 à 3 représentent trois vues en coupe d'un dispositif selon l'invention montrant trois positions des pièces durant le déplacement du pêne à partir de la position dans laquelle il bloque la colonne de direction ;
- la figure 4 est une vue à plus grande échelle du détail D de la figure 1 ; et
- la figure 5 présente des courbes du déplacement des pièces en fonction du temps.

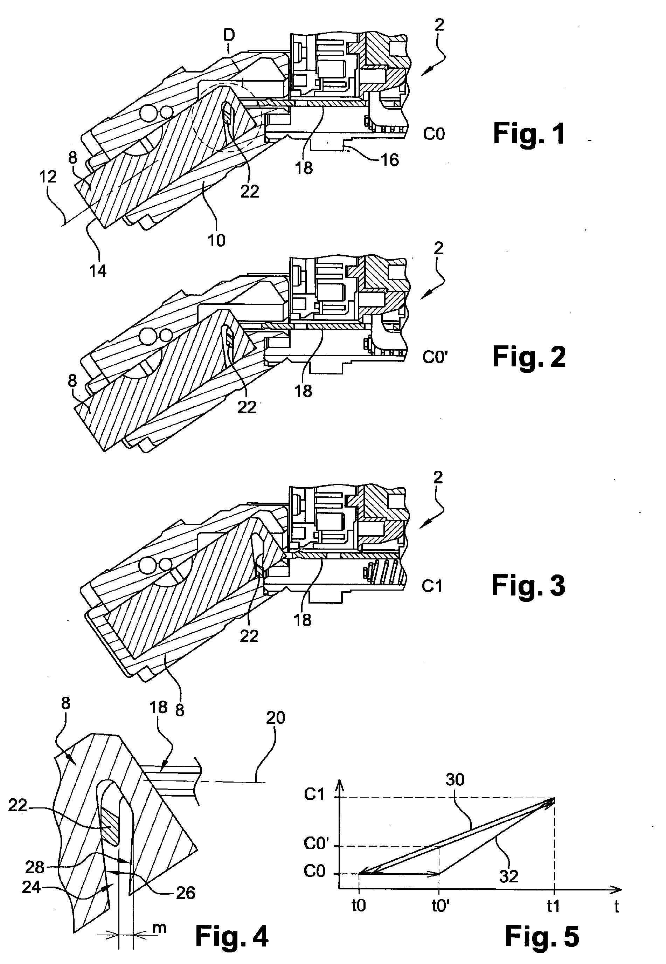

On a illustré aux figures 1 à 4 un mode de réalisation du dispositif antivol 2 selon l'invention pour colonne de direction de véhicule automobile. Ce dispositif comprend notamment un verrou à clé ou organe analogue, non illustré. Lorsque le conducteur du véhicule introduit la clé dans le verrou, il fait tourner un rotor de cette dernière pour mettre le véhicule sous tension et en fonctionnement.

Le dispositif comprend notamment un pêne 8 ayant une forme générale de parallélépipède rectangle et monté mobile à coulissement dans un guide-pêne 10. Le coulissement s'effectue suivant une direction longitudinale 12 du pêne. Lorsqu'il se trouve en position étendue comme illustré à la figure 1, le pêne, au moyen de son extrémité distale 14, vient en prise avec un organe de la colonne de direction du véhicule pour la bloquer en rotation autour de son axe de rotation.

L'actionnement du verrou au moyen de la clé permet de commander la position du pêne et donc le blocage ou le déblocage de la colonne de direction. On se référera notamment pour plus de détails à la demande WO 2008/074726 au nom de la demanderesse.

Le dispositif 2 comprend un boîtier 16 renfermant notamment un actionneur 18 servant à la manoeuvre du pêne 8. L'actionneur 18 est formé, en l'espèce, par une tirette, qui présente sur la plus grande partie de sa longueur une forme rectiligne allongée suivant une direction 20. La tirette est montée mobile à coulissement par rapport au boîtier 16 suivant cette direction.

L'actionneur présente une extrémité distale 22 recourbée et engagée dans une cavité 24 d'une extrémité proximale du pêne. Dans cette cavité, le pêne 8 présente, en l'espèce, deux surfaces 26 et 28 formant des rampes pour l'extrémité 22 formant un suiveur destiné à venir en appui contre ces rampes. Chacune des rampes 26 et 28 a, en l'espèce, une forme préférentiellement plane. Les deux rampes s'étendent en regard et à distance l'une de l'autre, et sont inclinées l'une par rapport à l'autre. La cavité ayant un profil général en « U », les deux rampes forment les faces internes des branches du « U », la cavité étant ouverte vers le bas en l'espèce. Le fond de la cavité a une forme arrondie. Le suiveur 22, emprisonné dans la cavité 24, met donc l'actionneur 18 en prise avec le pêne 8. La rampe 26, la plus à gauche sur la figure 4, est dirigée vers la droite. Elle sert à la manoeuvre du pêne par l'actionneur pour son placement en position de blocage. La rampe 28, située la plus à droite et orientée vers la gauche, sert à la manoeuvre du pêne par l'actionneur pour qu'il quitte la position de blocage.

La cavité 24 présente une plus grande largeur dans sa partie médiane qu'en partie basse, à son extrémité débouchante. On désigne par partie médiane la partie qu'occupe le suiveur 22 dans la position des figures 1 et 4. Dans cette position, en effet, la largeur de la cavité et celle du suiveur, mesurées suivant la direction 20, sont telles que la largeur de la cavité excède de la distance m la largeur du suiveur. Le suiveur est donc en contact par sa face gauche avec la rampe 26 sans être en contact par sa face droite avec la rampe 28.

Les deux rampes vont en s'approchant l'une de l'autre en direction de l'extrémité inférieure débouchante de la cavité.

Le dispositif fonctionne comme suit. On suppose que les pièces se trouvent initialement dans la position de la figure 1, qui illustre le pêne 8 et l'actionneur 18 avant le début du déplacement. Les deux organes sont en fin de course. Le pêne 8 est dans la position dans laquelle il bloque la manoeuvre de la colonne. L'actionneur 18 est dans la position qu'il a atteinte pour placer le pêne 8 dans cette position de blocage. Le suiveur 22 est en appui contre la partie haute de la rampe 26.

Le conducteur introduit la clé de contact dans le verrou et tourne la clé, ce qui entraîne notamment le déblocage de la colonne de direction. Pour cela, entre autres, l'actionneur 18 débute un déplacement en direction opposée à celle du pêne, vers la droite sur les figures. La première phase de ce déplacement place l'actionneur dans la position illustrée à la figure 2. Au cours de cette phase, il parcours la distance *m.* Le suiveur quitte donc la rampe 26 et vient en contact avec la rampe 28. Au cours de ce mouvement, le pêne n'est pas manoeuvré par l'actionneur. Cette première phase de déplacement constitue donc une course morte de ce dernier.

La suite constitue une deuxième phase dans laquelle les pièces passent de la position de la figure 2 à celle de la figure 3. Au cours de cette phase, le suiveur 22 demeure en appui sur la rampe 28. Il se déplace suivant la direction 20 et force le pêne 8 à coulisser dans le guide-pêne 10 suivant la direction 14, sur les figures vers le haut et vers la droite. Le suiveur parcourt donc la rampe 28 vers le bas. Le pêne quitte ainsi la position de blocage et libère la colonne. La figure 3 illustre l'actionneur 18 et le pêne 8 lorsqu'ils ont atteint leur fin de course. A ce stade, le suiveur 22 se trouve à l'extrémité inférieure débouchante de la cavité 24.

Après l'utilisation du véhicule, pour que le dispositif immobilise à nouveau la colonne de direction, l'actionneur 18 se déplace en direction du pêne vers la gauche. Le suiveur 22 étant dès le départ en contact avec la rampe 26, l'amorce du mouvement de l'actionneur débute immédiatement un mouvement du pêne en direction de sa position de blocage, sans aucune course morte ou avec un léger jeu d'environ 0,5 mm entre le suiveur et la rampe 26. Le suiveur 22 monte le long de la rampe 26. Ce mouvement se poursuit jusqu'à l'arrivée du pêne dans sa position de blocage telle qu'illustrée à la figure 1.

On voit donc que les points de départ et d'arrivée du pêne 8 et de l'actionneur 18 coïncident dans les deux sens de déplacement. En revanche, les mouvements relatifs des pièces n'ont pas lieu de la même façon dans les deux sens de déplacement ni même de façon simultanée.

Sur la figure 5, on a désigné par t0, t0' et t1 les instants correspondant aux figures 1, 2 et 3, et par c0, c0' et c1, les configurations des pièces sur ces trois figures. La droite 30 illustre le déplacement de l'actionneur 18 tandis que la courbe 32 formée de trois segments de droite illustre le déplacement du pêne. On suppose ici, pour la compréhension de la figure 5, que le déplacement de l'actionneur 18 s'effectue à la même vitesse pour placer le pêne en position de blocage et pour la lui faire quitter. Comme on le voit sur cette figure, le mouvement de l'actionneur s'effectue à vitesse constante et sans interruption ni course morte dans chaque sens de déplacement. Par comparaison, entre les instants t0 et t0', l'actionneur se déplace tandis que le pêne demeure immobile. Pendant l'intervalle suivant, entre les instants t0' et t1, les deux pièces se déplacent simultanément.

La figure 5 montre que la vitesse du pêne est plus grande, entre les instants t0' et t1, à savoir pour passer de la configuration de la figure 2 à celle de la figure 3, que sa vitesse en sens contraire à un moment quelconque du déplacement. Cela est logique dans la mesure où le pêne est resté immobile pendant l'intervalle t0-t0' et doit donc rattraper son retard durant l'intervalle suivant.

Lors de l'intervention d'un malfaiteur sur le dispositif, il se peut que l'actionneur 18 se déplace légèrement vers la droite par exemple si la partie droite du dispositif antivol a été rompue. Mais la course morte du pêne entre les instants t0 et t0' permet de maintenir le pêne immobile pendant le déclenchement de la fonction de super condamnation. La colonne de direction reste donc immobilisée. Le mécanisme incorpore donc en quelque sorte un retardateur du mouvement du pêne par rapport à celui de l'actionneur.

A cet effet, il s'avère qu'une course morte m comprise entre 1,5 mm et 3 mm fournit une probabilité particulièrement forte d'une telle super condamnation du pêne, et un sous intervalle encore préféré pour la course m est un intervalle allant de 1,8 à 2,2 mm.

On observe que l'invention peut se matérialiser dans une modification de l'interaction mécanique entre le pêne et l'actionneur sans que se trouve modifiée la course globale de remontée du pêne en fonctionnement normal. De même, les trajectoires des pièces restent les mêmes. C'est seulement le déplacement des pièces qui se trouve modifié dans le sens correspondant à la suppression de l'immobilisation.

Bien entendu, on pourra apporter à l'invention de nombreuses modifications sans sortir du cadre de celle-ci.

On pourra modifier la forme des rampes 26 et 28. On pourra en particulier donner à la rampe de droite 28 une forme courbe convexe, ce qui modifiera l'évolution de la vitesse du pêne pour passer de la configuration de la figure 2 à celle de la figure 3.

On pourrait prévoir un autre type d'interaction entre le pêne et l'actionneur qu'une coopération par rampe et suiveur. Les deux organes pourront coopérer au moyen d'au moins une pièce intermédiaire.

## Revendications

1. Dispositif antivol (2) pour colonne de direction de véhicule, **caractérisé en ce qu'**il comprend :
- un pêne (8) apte à occuper une position de blocage d'une colonne de direction, et
- un actionneur (18) de manoeuvre du pêne,
le dispositif étant agencé de sorte qu'un déplacement de l'actionneur (18) pour que le pêne (8) quitte la position de blocage, à partir d'une position dans laquelle il a placé le pêne en position de blocage, débute par une course morte (m) n'entraînant pas de déplacement du pêne, et de sorte qu'un déplacement quelconque de l'actionneur (18) en vue de placer le pêne (8) en position de blocage s'effectue sans course

2. Dispositif selon la revendication précédente, agencé de sorte que, pour une même vitesse de déplacement de l'actionneur (18), un déplacement du pêne (8) au moyen de l'actionneur s'effectue à plus grande vitesse en direction opposée à la position de blocage qu'en direction de cette position.

3. Dispositif selon au moins l'une quelconque des revendications précédentes, agencé de sorte que l'actionneur (18) coopère directement avec le pêne (8) pour le déplacer.

4. Dispositif selon au moins l'une quelconque des revendications précédentes, agencé de sorte que l'actionneur (18) coopère avec le pêne (8) par effet de rampe.

5. Dispositif selon au moins l'une quelconque des revendications précédentes dans lequel le pêne (8) présente au moins une rampe (26, 28).

6. Dispositif selon au moins l'une quelconque des revendications précédentes, qui présente au moins une rampe plane (26, 28) pour la manoeuvre du pêne (8) en direction de la position de blocage et/ou en direction opposée à la position de blocage

7. Dispositif selon au moins l'une quelconque des revendications précédentes, qui présente deux rampes planes (26, 28) inclinées l'une par rapport à l'autre, pour la manoeuvre du pêne (8).

8. Dispositif selon au moins l'une quelconque des revendications précédentes dans lequel l'actionneur (18) s'étend dans une cavité (24) du pêne.

9. Dispositif selon l'une quelconque des revendications précédentes, **caractérisé en ce que** la course morte a une valeur comprise entre 1,5 et 3 mm.

10. Dispositif selon l'une quelconque des revendications précédentes, **caractérisé en ce que** la course morte a une valeur comprise entre 1,8 et 2,2 mm.

## Patentansprüche

1. Diebstahlschutzvorrichtung für eine Lenksäule eines Fahrzeuges, **dadurch gekennzeichnet, dass** sie Folgendes umfasst:
- einen Bolzen (8), der eine Stellung zur Blockierung einer Lenksäule einnehmen kann; und
- einen Aktuator (18) zum Betätigen des Bolzens,
wobei die Vorrichtung derart angeordnet ist, dass eine Verschiebung des Aktuators (18), damit der Bolzen (8) die Blockierstellung verlässt, ausgehend von einer Stellung, in der er den Bolzen in die Blockierstellung platziert hat, mit einem Totgang (m) beginnt, der keine Verschiebung des Bolzens herbeiführt, und derart, dass jegliche Verschiebung des Aktuators (18) zum Platzieren des Bolzens (8) in die Blockierstellung ohne Totgang erfolgt.

2. Vorrichtung nach dem vorhergehenden Anspruch, die derart angeordnet ist, dass bei gleicher Verschiebungsgeschwindigkeit des Aktuators (18) eine Verschiebung des Bolzens (8) mittels des Aktuators in einer Richtung aus der Blockierstellung bei einer sehr viel höheren Geschwindigkeit erfolgt, als in einer Richtung in diese Stellung.

3. Vorrichtung nach mindestens einem der vorhergehenden Ansprüche, die derart angeordnet ist, dass der Aktuator (18) mit dem Bolzen (8) zu dessen Verschiebung direkt zusammenwirkt.

4. Vorrichtung nach mindestens einem der vorhergehenden Ansprüche, die derart angeordnet ist, dass der Aktuator (18) mit dem Bolzen (8) über eine Rampenwirkung zusammenwirkt.

5. Vorrichtung nach mindestens einem der vorhergehenden Ansprüche, wobei der Bolzen (8) mindestens eine Rampe (26, 28) aufweist.

6. Vorrichtung nach mindestens einem der vorhergehenden Ansprüche, die mindestens eine ebene Rampe (26, 28) zum Betätigen des Bolzens (8) in Richtung der Blockierstellung und/oder in der Blockierstellung entgegengesetzter Richtung aufweist.

7. Vorrichtung nach mindestens einem der vorhergehenden Ansprüche, die zum Betätigen des Bolzens (8) zwei bezüglich einander geneigte ebene Rampen (26, 28) aufweist.

8. Vorrichtung nach mindestens einem der vorhergehenden Ansprüche, wobei sich der Aktuator (18) in einem Hohlraum (24) des Bolzens erstreckt.

9. Vorrichtung nach einem der vorhergehenden Ansprüche, **dadurch gekennzeichnet, dass** der Totgang einen Wert zwischen 1,5 und 3 mm aufweist.

10. Vorrichtung nach einem der vorhergehenden Ansprüche, **dadurch gekennzeichnet, dass** der Totgang einen Wert zwischen 1,8 und 2,2 mm aufweist.

## Claims

1. Antitheft device (2) for a vehicle steering column, **characterized in that** it comprises:
- a bolt (8) which can occupy a position in which it blocks a steering column; and
- an actuator (18) for manoeuvring the bolt,
the device being designed in such a way that a displacement of the actuator (18), such that the bolt (8) leaves the blocking position, from a position in which it placed the bolt in the blocking position, begins with dead travel (m) that does not cause the bolt to be displaced, and in such a way that any displacement of the actuator (18) with a view to placing the bolt (8) in a blocking position is made without dead travel.

2. Device according to the preceding claim, designed in such a way that, for the same speed of displacement of the actuator (18), the bolt (8) is displaced by means of the actuator at a greater speed away from the blocking position than toward this position.

3. Device according to at least one of the preceding claims, designed in such a way that the actuator (18) interacts directly with the bolt (8) in order to displace it.

4. Device according to at least one of the preceding claims, designed in such a way that the actuator (18) interacts with the bolt (8) with a ramp effect.

5. Device according to at least one of the preceding claims, in which the bolt (8) has at least one ramp (26, 28).

6. Device according to at least one of the preceding claims, which has at least one plane ramp (26, 28) for manoeuvring the bolt (8) toward the blocking position and/or away from the blocking position.

7. Device according to at least one of the preceding claims, which has two plane ramps (26, 28) inclined relative to each other in order to manoeuvre the bolt (8).

8. Device according to at least one of the preceding claims, in which the actuator (18) extends into a cavity (24) of the bolt.

9. Device according to at least one of the preceding claims, **characterized in that** the dead travel has a value of between 1.5 and 3 mm.

10. Device according to at least one of the preceding claims, **characterized in that** the dead travel has a value of between 1.8 and 2.2 mm.
